(19) Europäisches Patentamt

European Patent Office

Office européen des brevets

(11) **EP 0 855 072 B1**

(12) **FASCICULE DE BREVET EUROPEEN**

(45) Date de publication et mention
de la délivrance du brevet:
**14.05.2003  Bulletin 2003/20**

(51) Int Cl.⁷: **G07F 7/10**

(86) Numéro de dépôt international:
**PCT/FR96/01524**

(21) Numéro de dépôt: **96933463.0**

(22) Date de dépôt: **01.10.1996**

(87) Numéro de publication internationale:
**WO 97/014119 (17.04.1997 Gazette 1997/17)**

(54) **PROCEDE D'AUTHENTIFICATION POUR MICROCIRCUIT A LOGIQUE CABLEE**

BEGLAUBIGUNGSVERFAHREN FÜR EINEN VERDRAHTETEN MIKROSCHALTKREIS

AUTHENTICATION METHOD FOR A WIRED-LOGIC MICROCIRCUIT

(84) Etats contractants désignés:
**CH DE FR GB IE IT LI NL**

(30) Priorité:  **09.10.1995  FR 9512178**

(43) Date de publication de la demande:
**29.07.1998  Bulletin 1998/31**

(73) Titulaire: **Inside Technologies**
**69930 Saint-Clément-les-Places (FR)**

(72) Inventeur: **KOWALSKI, Jacek**
**F-13530 Trets (FR)**

(74) Mandataire: **Marchand, André et al**
**OMNIPAT,**
**24 Place des Martyrs de la Résistance**
**13100 Aix-en-Provence (FR)**

(56) Documents cités:
**EP-A- 0 028 965        EP-A- 0 029 894**
**EP-A- 0 427 465        FR-A- 2 650 097**
**FR-A- 2 698 195        GB-A- 2 144 564**

## Description

La présente invention concerne un procédé d'authentification applicable à un circuit à logique câblée du type monté sur un support portable et à un terminal de lecture du microcircuit.

La présente invention concerne notamment le domaine des cartes à mémoire, et plus particulièrement les microcircuits à logique câblée dont sont équipées les cartes à mémoire.

Sous l'appellation générique de "carte à puce", on désigne en fait deux grandes catégories de cartes qui se distinguent au plan de la technologie : d'une part, les cartes à microprocesseur, d'autre part, les cartes dites "à mémoire". A la différence des cartes à microprocesseur, les cartes à mémoire ne disposent que d'un microcircuit à logique câblée qui offre des possibilités beaucoup plus réduites qu'un microcircuit à microprocesseur, en termes de souplesse d'emploi, de capacité de traitement des données, de programmation, et particulièrement en termes de sécurité et de protection contre la fraude.

En contrepartie, les microcircuits à logique câblée présentent l'avantage d'être d'un coût de revient très bas, de sorte que les cartes à mémoire ont connu ces dernières années un important développement dans le cadre d'applications ne nécessitant pas un haut niveau de sécurité. Ainsi, on a vu se généraliser l'emploi des cartes à prépaiement du type carte téléphonique. A l'heure actuelle, de nouvelles applications comme le porte-monnaie électronique ou la clef électronique (notamment dans le domaine automobile) sont envisagées à grande échelle.

Il est toutefois nécessaire, pour que ces nombreuses perspectives d'applications puissent se concrétiser, que les microcircuits à logique câblée offrent à l'avenir un niveau de sécurité beaucoup plus élevé qu'aujourd'hui, et qu'ils puissent, sur le plan de la sécurité d'emploi, rivaliser avec les microcircuits à microprocesseur qui disposent de mécanismes de sécurité performants implantés sous forme de logiciel.

Ainsi, un objectif général de la présente invention est d'améliorer les mécanismes de protection des microcircuits à logique câblée sans perdre de vue le fait que les coûts de fabrication augmentent très rapidement lorsque l'on cherche à réaliser des fonctions de sécurité sophistiquées.

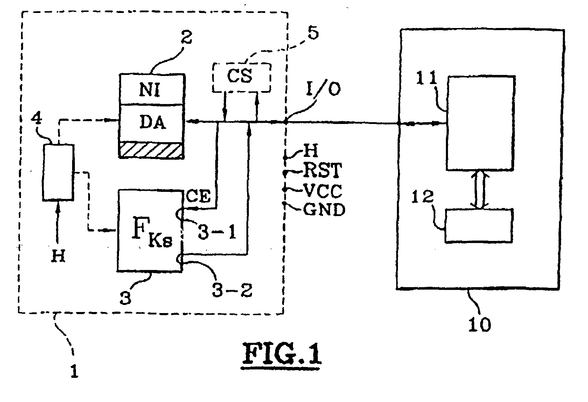

A titre de rappel, la figure 1 représente la structure et le fonctionnement d'un microcircuit 1 d'une carte à mémoire classique. Le microcircuit 1 à logique câblée comprend essentiellement une mémoire 2 de type sérié (c'est-à-dire accessible bit par bit), un circuit d'authentification 3 et un séquenceur logique 4 qui gère le fonctionnement des divers éléments à partir d'un signal d'horloge H fourni par un terminal 10 dans lequel la carte est insérée. La mémoire 2 contient, stockées sous forme binaire, diverses données comme un numéro de série de la carte NI (ou numéro d'identification du microcircuit) et des données DA de transaction représentant par exemple la valeur monétaire de la carte ou un nombre d'impulsions téléphoniques. Le circuit d'authentification 3 présente une entrée série 3-1 destinée à recevoir un code d'entrée CE et une sortie série 3-2 pour délivrer un code d'authentification CA. Le microcircuit 1 est en outre équipé de plots de contact assurant l'interface électrique avec le terminal 10, ici un plot d'entrée-sortie I/O pour la communication de données numériques, un plot RST d'initialisation du microcircuit, un plot H d'entrée du signal d'horloge, et deux plots d'alimentation électrique Vcc et GND. La sortie de la mémoire 2, ainsi que l'entrée 3-1 et la sortie 3-2 du circuit d'authentification, sont reliées au plot d'entrée-sortie I/O. Les données numériques circulent sous forme série, c'est-à-dire bit par bit en synchronisation avec le signal d'horloge, ce qui permet de simplifier la structure interne du circuit en ramenant à un seul fil les liaisons entre les divers éléments.

Lorsque la carte est insérée dans le terminal 10, il est indispensable, pour des raisons de sécurité, que le terminal 10 puisse déterminer si la carte est authentique ou frauduleuse. Le circuit d'authentification 3 va donc intervenir dans une procédure de vérification de l'authenticité de la carte qui se déroule comme décrit ci-après. On rappelle préalablement que le terminal 10, qui est généralement équipé d'un microprocesseur 11 commandé par une mémoire programme 12, connaît les secrets des mécanismes de sécurité implantés dans la carte.

Etape 1 - Le terminal 10 génère un code binaire aléatoire ALEXT qu'il applique au circuit d'authentification 3 en tant que code d'entrée CE. Le circuit 3 transforme le code ALEXT en un code d'authentification CA pouvant s'écrire

$$CA = F_{Ks} (ALEXT)$$

$F_{Ks}$ représentant la fonction de transformation, ou fonction d'authentification, réalisée par le circuit 3 à partir d'une clef secrète Ks dont il dispose.

Etape 2 - Parallèlement à l'étape 1, le terminal 10, qui connaît la clef secrète Ks et la fonction d'authentification $F_{ks}$ (enregistrée sous forme de logiciel dans la mémoire programme 12) calcule, de son côté, un code CA' tel que

$$CA' = F_{Ks} (ALEXT)$$

Etape 3 - Le terminal 10 compare le code CA produit par la carte et le code CA' qu'il a lui-même calculé. Si les deux codes sont différents, la carte n'est pas authentique et doit être refusée par le terminal.

Dans une variante connue du procédé qui vient d'être décrit, le terminal 10 ne connaît pas la clef secrète Ks, mais la détermine à partir du numéro de série NI et au moyen d'une autre clef secrète Kp dont il dispose et d'une fonction de transformation $F_{Kp}$ du type

$$Ks = F_{Kp} (NI)$$

Dans ce cas, l'étape 1 est précédée d'une étape préliminaire où le terminal 10 lit le numéro de série NI dans la mémoire 2 et en déduit Ks.

En définitive, on voit que le mécanisme de protection contre la fraude repose entièrement sur la fonction d'authentification $F_{KS}$ qui ne doit pas pouvoir être décodée par un fraudeur.

Un inconvénient du procédé d'authentification qui vient décrit est que la carte peut être "interrogée" à volonté par un fraudeur, qui peut lui envoyer une grande quantité de codes aléatoires ALEXT, observer les codes d'authentification CA émis en retour par le circuit d'authentification 3, et essayer, par recoupements, de décoder la fonction d'authentification $F_{Ks}$ ou trouver son secret Ks.

Ainsi, un objectif de la présente invention est d'éviter qu'une carte à mémoire puisse être interrogée à répétition par une personne non habilitée qui cherche à en découvrir le secret.

Outre l'authentification de la carte, un deuxième mécanisme classique de sécurité est la vérification de la légitimité du porteur de la carte. Cette procédure qui a pour but de protéger les cartes contre le vol repose sur l'introduction préalable par l'utilisateur d'un code secret CS' dans le terminal. Comme illustré en traits pointillés sur la figure 1, on équipe le microcircuit 1 déjà décrit d'un circuit 5 de vérification qui va recevoir (sous forme numérique) du terminal 10 le code secret CS' que le terminal a lui-même reçu de l'utilisateur. Le circuit 5 est par exemple un comparateur logique de type série qui possède le code secret CS. Si le code envoyé CS' par le terminal, tel qu'il lui a été donné par l'utilisateur, correspond au code CS inscrit dans le circuit 5, la sortie du circuit 5 délivre sur le plot I/O un bit d'une valeur prédéterminée, par exemple égal à 1, et le terminal sait qu'il peut commencer la transaction. Si par contre le bit délivré est à 0, le terminal indique à l'utilisateur que le code CS' est erroné.

Cette technique d'authentification de l'utilisateur au moyen d'un circuit à logique câblée présente l'inconvénient d'être complexe et coûteuse à mettre en oeuvre. Un autre inconvénient de ce procédé classique est que le code secret circule clairement sur la ligne de communication carte/terminal, de sorte qu'un "espionnage" électronique de cette ligne permettrait à coup sûr de connaître le code secret.

Les demandes de brevet FR 2 698 195 et FR 2 650 097 donnent des exemples de réalisation de circuits d'authentification classiques à logique câblée, dans lesquels la clef secrète de cryptographie (référencée Ks dans ce qui précède) prend la forme classique d'une mémoire de données secrètes non volatile. Par ailleurs, la demande EP 0 029 894 décrit une procédure d'authentification de l'utilisateur d'une carte à puce à microprocesseur comprenant : une première opération de cryptage d'un code aléatoire au moyen d'une clef secrète de cryptographie (référencée Ks dans ce qui précède) détenue en tout ou en partie par l'utilisateur de la carte et présentée par lui à la carte ou à un terminal ; une deuxième opération simultanée de cryptage du code aléatoire au moyen d'une clef secrète de cryptage "vraie" détenue par la carte ; et une opération de comparaison des résultats des deux opérations de cryptage, conduisant à un blocage de la carte si les résultats sont différents après un nombre prédéterminé d'essais.

Enfin, la demande EP 0 028 965 décrit un procédé d'authentification de carte à puce dans lequel le code d'authentification (R) est généré par un programme cryptographie p recevant comme données d'entrée un mot aléatoire (E) un code d'identification (I), et aussi un code secret (S) détenu par la carte à puce et par le terminal. La demande EP 0 028 965 propose également de procéder, parallèlement à l'authentification cryptographique, à la vérification par la carte à puce de la validité du code secret de l'utilisateur ("mot de passe immatériel", page 10 lignes 6 à 12, désigné code CS' dans la présente demande).

Ainsi, un autre objectif de la présente invention est de prévoir une solution permettant, dans un microcircuit à logique câblée, la vérification du code secret CS' de façon moins coûteuse et dans de meilleures conditions de sécurité.

Cet objectif est atteint grâce à un procédé d'authentification selon la revendication indépendante 1.

Selon un mode de réalisation, le code aléatoire est généré par le terminal.

Selon un mode de réalisation, le code aléatoire est généré par le microcircuit.

Le procédé de l'invention peut être appliqué à l'authentification classique du microcircuit par le terminal. Dans ce cas, la comparaison des codes d'authentification est réalisée par le terminal.

Selon un mode de réalisation, le code secret est disposé dans une zone de la mémoire rendue accessible en écriture au terminal une fois contrôlée la validité du code secret de l'utilisateur.

La présente invention concerne également un microcircuit à logique câblée du type monté sur un support portable selon la revendication indépendante 6.

Avantageusement, les moyens de blocage comprennent une porte logique recevant sur sa première entrée la sortie d'un circuit comparateur et sur sa deuxième entrée la sortie du circuit d'authentification, la sortie de la porte logique étant connectée à un plot d'entrée-sortie du microcircuit.

Ces caractéristiques et avantages ainsi que d'autres de la présente invention seront exposés plus en détail dans la description suivante d'un procédé d'authentification mutuelle selon l'invention, d'une structure de microcircuit permettant de mettre en oeuvre le procédé, et d'un procédé de vérification selon l'invention du code secret d'un utilisateur de carte à mémoire, faite à titre non limitatif en relation avec les figures jointes parmi lesquelles :

la figure 1 précédemment décrite représente sous forme de blocs le schéma électrique classique d'un microcircuit de carte à mémoire,
la figure 2 représente sous forme de blocs le schéma électrique d'un microcircuit selon l'invention, et
la figure 3 représente le schéma logique d'un bloc de la figure 2.

**Procédé d'authentification mutuelle entre un microcircuit et un terminal**

On rappelle qu'un objectif de la présente invention est d'empêcher des interrogations multiples d'un microcircuit de carte à mémoire ou équivalent.

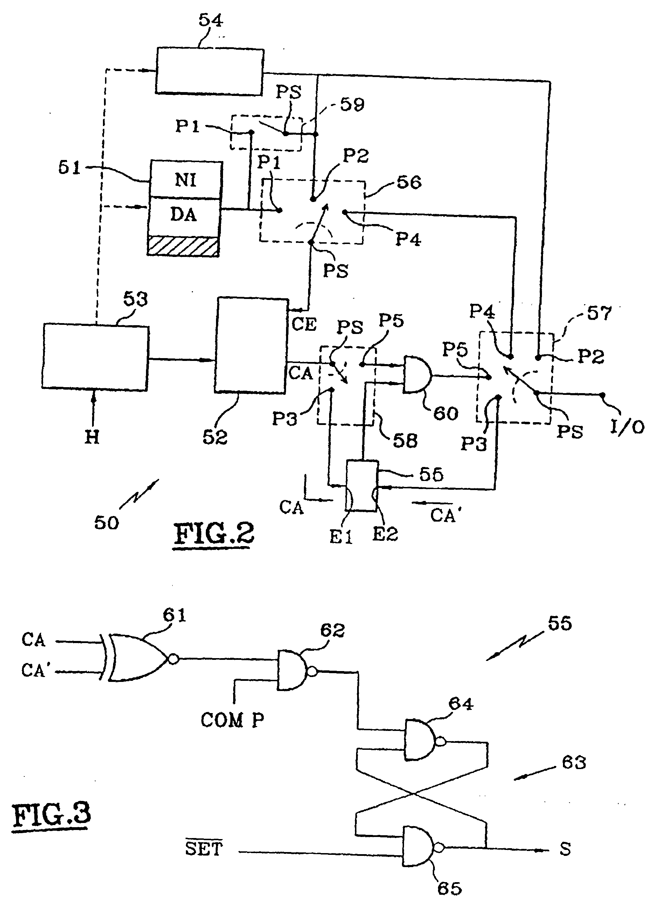

La figure 2 représente le schéma électrique d'un microcircuit 50 à logique câblée de carte à mémoire pouvant résister aux interrogations multiples. Le microcircuit 50 comprend, comme le microcircuit classique déjà décrit en relation avec la figure 1, une mémoire de données 51 à lecture série (c'est-à-dire bit par bit) contenant par exemple le numéro de série NI de la carte et des données DA de transaction. Egalement, on retrouve un circuit d'authentification 52, un séquenceur logique 53 assurant la commande des divers éléments du circuit 50, et un plot d'entrée-sortie I/O.

Selon l'invention, le microcircuit 50 comprend en outre un générateur 54 de mots binaires aléatoires, un comparateur logique série 55 à deux entrées E1, E2, trois basculeurs logiques 56, 57, 58, un interrupteur logique 59 et une porte logique ET 60. Le générateur aléatoire 54 est par exemple un registre à décalage dont le fonctionnement est rendu aléatoire de façon classique par le fait que des bits internes de ce registre sont ramenés sur son entrée par une porte OU EXCLUSIF. Le basculeur logique 56 est un basculeur à trois positions et présente trois plots d'entrée P1, P2, P4 et un plot de sortie PS. Le basculeur 57 est un basculeur à quatre positions et présente quatre plots d'entrée P2, P3, P4, P5 et un plot de sortie PS. Le basculeur 58 est un basculeur à deux positions et présente deux plots d'entrée P3, P5 et un plot de sortie PS. Enfin, l'interrupteur 59 présente un plot d'entrée P1 et un plot de sortie PS.

La sortie de la mémoire 51 est connectée aux plots P1 du basculeur 56 et de l'interrupteur 59, la sortie du générateur aléatoire 54 aux plots P2 des basculeurs 56 et 57, et la sortie du circuit d'authentification 52 au plot PS du basculeur 58. Les entrées E1, E2 du comparateur 55 sont connectées aux plots P3 des basculeurs 57 et 58, les entrées de la porte ET 60 sont connectées au plot P5 du basculeur 58 et à la sortie du comparateur 55. La sortie de la porte ET 60 est connectée au plot P5 du basculeur 57 dont le plot PS est connecté au plot d'entrée-sortie I/O du microcircuit 50. Enfin, le plot PS du basculeur 56 est connecté à l'entrée du circuit d'authentification 52, les plots P4 des basculeurs 56 et 57 sont connectés ensemble, et le plot PS de l'interrupteur 59 est connecté au plot P2 du basculeur 57.

Selon l'invention, le séquenceur logique 53 est câblé pour qu'une procédure d'authentification d'un terminal, par exemple le terminal 10 de la figure 1, soit réalisée par le microcircuit 50 dès la réception des premiers coups d'horloge qui suivent l'introduction de la carte dans le terminal 10. Bien entendu, cette procédure d'authentification ne nécessite pas de modification de la structure du terminal 10, qui doit simplement être programmé pour répondre au microcircuit 50 comme on le décrira maintenant.

**Authentification du terminal**

- Etape 1 : Le basculeur 56 et l'interrupteur 59 sont mis en position P1/PS et le basculeur 57 en position P2/PS. Les données NI et DA de la mémoire 51 sont envoyées en série dans le circuit d'authentification 52 et sur le plot I/O.
- Etape 2 : : l'interrupteur 59 est ouvert, les basculeurs 56 et 57 sont mis en position P2/PS. Le générateur aléatoire 54 génère un code aléatoire ALINT (une suite aléatoire de "1" et de "0") qui est envoyé dans le circuit d'authentification 52 et sur le plot I/O.
- Etape 3 : les interrupteurs 57 et 58 sont mis en position P3/PS. Le circuit d'authentification 52 produit un code série CA de la forme

$$CA = F_{Ks} (NI, DA, ALINT)$$

NI, DA et ALINT étant les données chaînées formant le code d'entrée CE à partir desquelles est généré le code d'authentification CA. Au fur et à mesure de sa production, le code CA est appliqué sur l'entrée E1 du comparateur logique série 55. Au même instant, c'est-à-dire en synchronisation, l'entrée E2 du comparateur 55 reçoit un code série CA' envoyé par le terminal 10 par l'intermédiaire du plot I/O et du basculeur 57.

Le fait d'injecter NI et DA en tant que composantes du code d'entrée CE permet, pour des raisons de sécurité, de placer le circuit d'authentification 52 dans un état logique interne le plus éloigné que possible de son état logique "zéro", c'est-à-dire son état logique après remise à zéro des circuits qui le constituent.

L'étape 4 décrite ci-après commence lorsque les deux codes série CA et CA' ont été injectés dans le comparateur 55. A cet instant, la sortie du comparateur 55 est à 1 si les deux codes CA et CA' étaient identiques ou à 0 si les deux codes étaient différents.

**Authentification de la carte**

- Etape 4 : les basculeurs 56 et 57 sont mis en position P4/PS, l'entrée du circuit d'authentification 52 étant ainsi reliée au plot d'entrée-sortie I/O. On entre dans une procédure classique d'authentification de la carte d'un type connu en soi. Etant donné que cette procédure a été précédée des étapes 1 à 3 selon l'invention, elle peut se décliner en plusieurs variantes selon que l'on décide de remettre à zéro le circuit d'authentification 52 ou de le laisser dans l'état logique interne dans lequel il est au terme de l'étape 3.

    (a) Si l'on remet le circuit 52 à zéro, on peut prévoir que le terminal 10, qui a déjà lu les données NI et DA au cours de l'étape 1, renvoie NI et DA dans le circuit d'authentification 52 accompagnées d'un code aléatoire ALEXT qu'il a lui-même produit.
    (b) Si l'on ne remet pas à zéro le circuit d'authentification 52, le terminal n'envoie que le code aléatoire ALEXT, il n'est pas nécessaire de renvoyer les données NI et DA dans le circuit d'authentification 52 qui les a déjà reçues à l'étape 1.

- Etape 5 : on suppose que l'option (a) ci-dessus a été choisie. Les basculeurs 57 et 58 sont en position P5/PS. La sortie du circuit d'authentification est reliée au plot d'entrée sortie I/O par l'intermédiaire de la porte ET 60, et délivre vers le terminal 10 un code d'authentification CA de la forme

$$CA = F_{Ks} (NI, DA, ALEXT)$$

qui permettra au terminal 10 de vérifier l'authenticité de la carte.

Toutefois, si la sortie du comparateur 55 est passée à 0 au cours de l'étape 3, la porte ET ne sera pas passante et le code CA émis par le circuit d'authentification 52 n'atteindra pas le terminal 10 qui est considéré comme non authentique. En effet, le terminal 10 ayant reçu du microcircuit 50 les paramètres NI, DA et ALINT au cours des étapes 1 et 2 aurait dû être en mesure de délivrer au cours de l'étape 3 un code CA' en tout point identique au code CA.

On voit ainsi que grâce à la présente invention, la carte ne va émettre un code d'authentification que si elle a elle-même authentifié préalablement le terminal qui l'interroge. Aucune interrogation à répétition de la carte ne pourra donc être faite par une personne non habilitée.

A titre d'exemple, la figure 3 représente un mode de réalisation du comparateur série 55. Le comparateur 55 comprend en entrée une porte OU EXCLUSIF 61 recevant les codes CA et CA'. La sortie de la porte 61 est appliquée sur l'entrée d'une porte NON ET 62 dont l'autre entrée reçoit un signal COMP. La sortie de la porte 62 est appliquée sur une première entrée d'une bascule à mémoire 63 de type NON ET comprenant de façon classique deux portes NON ET 64, 65 dont les sorties sont réciproquement ramenées sur les entrées. L'autre entrée de la bascule à mémoire 63 reçoit un signal /SET de remise à 1 de sa sortie. La sortie de la bascule 63 forme la sortie du comparateur 55.

Avant l'étape 3, le signal /SET est mis à 0 un court instant pour s'assurer que la sortie du comparateur est à 1. Pendant l'étape 3, quand CA est comparé à CA', le signal COMP est mis à 1. Si au cours de l'étape 3 les codes CA et CA' présentent deux bits différents, ou plus, la sortie du comparateur 55 passe à 0 et reste définitivement à 0, de sorte que la porte ET sera bloquée au cours des étapes suivantes. Pour remettre la sortie du comparateur à 1 (/SET mis à 0), il faudra remettre à zéro le séquenceur 53 et recommencer les étapes 1, 2 et 3 précédemment décrites, de sorte qu'un code d'authentification CA émis par la carte ne pourra jamais être lu sur le plot I/O tant que l'entité qui questionne ne se sera pas préalablement habilitée auprès de la carte.

Bien entendu, d'autres moyens de blocage, total ou partiel, du microcircuit 50 peuvent être prévus par l'homme de l'art en vue d'empêcher la carte d'émettre un code d'authentification quand le terminal ne s'est pas préalablement habilité. Toutefois, la solution préférée de l'invention, qui consiste à bloquer la sortie du circuit d'authentification 52, présente l'avantage d'être particulièrement simple à mettre en oeuvre et de ne pas nécessiter l'intervention du séquenceur câblé 53.

**Procédé pour vérifier la validité d'un code secret détenu par un utilisateur**

On a vu au préambule en relation avec la figure 1 que la prévision d'un procédé d'identification de l'utilisateur d'une carte à mémoire au moyen d'un code secret CS nécessitait, dans un microcircuit 1 à logique câblée, l'ajout de moyens de comparaison 5 coûteux et encombrants.

La présente invention propose une solution particulièrement simple et de grande sécurité qui peut être mise en oeuvre moyennant uniquement une modification de la logique câblée du séquenceur d'un microcircuit sans modification de sa structure générale.

Plus précisément, et si l'on se réfère par exemple à la figure 1, la présente invention propose tout d'abord de disposer le code secret CS de la carte dans un zone de la mémoire 2 non accessible par le terminal, représentée par une zone hachurée.

Ensuite, la présente invention prévoit de chaîner le code secret CS avec les autres données formant le code d'entrée CE, de telle sorte que le code d'authentification CA soit fonction du code secret CS.

De façon générale, le procédé de vérification du code secret CS' de l'utilisateur selon la présente invention peut être mis en oeuvre :

(1) soit au cours de la procédure classique d'authentification-de la carte par le terminal 10,
(2) soit au cours de la procédure d'authentification du terminal 10 par la carte, telle que décrite plus haut.

**(1) Vérification du code secret CS' pendant la procédure classique d'authentification de la carte par le terminal**

Dans ce cas, et en se référant par exemple à la figure 1, le code d'entrée CE injecté dans le circuit d'authentification 3 comprend :

- les données de la mémoire, ici le numéro de série NI et des données de transaction DA,
- le code secret CS de la carte lue dans la mémoire 2 (zone hachurée) et envoyé directement dans le circuit d'authentification (la zone hachurée contenant CS pouvant bien entendu être lue par le microcircuit 1 mais pas par le terminal 10),
- le mot aléatoire ALEXT envoyé par le terminal 10,

Le code d'authentification émis par la carte peut s'écrire ainsi :

$$CA = F_{Ks} (NI, DA, CS, ALEXT),$$

et le code calculé par le terminal 10 peut s'écrire :

$$CA' = F_{Ks} (NI, DA, CS', ALEXT)$$

CS' étant le code secret donné au terminal 10 par l'utilisateur.

La comparaison des deux codes CA et CA' est effectuée par le terminal 10. Si le terminal constate que les deux codes sont différents, c'est peut être parce que le code CS' donné par l'utilisateur est mauvais ou parce que la carte est falsifiée. Il n'est pas nécessaire que le terminal 10 discerne la cause exacte, il suffit qu'il interrompe la transaction. Eventuellement, le terminal peut demander à l'utilisateur de composer à nouveau le code secret CS' et répéter la procédure d'authentification.

**(2) Vérification du code secret CS' pendant la procédure d'authentification du terminal par la carte**

La procédure d'authentification du terminal 10 par la carte a été décrite plus haut en relation avec la figure 2 à laquelle on se réfère à nouveau.

· Dans ce cas, le code d'entrée CE injecté dans le circuit d'authentification 52 comprend :

- les données dans la mémoire, ici le numéro de série NI et les données de transaction DA,
- le code secret CS de la carte envoyé directement dans le circuit d'authentification 52 depuis la mémoire 2 (zone hachurée),
- le mot aléatoire ALINT émis par le générateur aléatoire 54 du microcircuit 50,

Le code d'authentification CA envoyé par le circuit d'authentification 52 sur l'entrée E1 du comparateur logique 55 est alors le suivant :

$$CA = F_{Ks} (NI, DA, CS, ALINT)$$

Et le code calculé par le terminal 10 et envoyé sur l'entrée E2 du comparateur logique 55 est le suivant :

$$CA' = F_{Ks} (NI, DA, CS', ALINT)$$

CS' étant le code secret donné au terminal par l'utilisateur.

La comparaison des deux codes CA et CA' est effectuée par 1 comparateur 55. Si les deux codes sont différents le comparateur 55 passe à 0 et la porte logique 60 sera bloquée lors de la tentative par le terminal 10 de tester l'authenticité de la carte. Le terminal 10 saura donc que le code CS' était mauvais quand il ne recevra pas de réponse de la carte après l'avoir interrogée.

Bien entendu, de nombreuses autres variantes de ce procédé peuvent être prévues par l'homme de l'art. En particulier, on pourrait prévoir une procédure semblable à celle décrite au point (1) mais dans laquelle le code ALEXT serait remplacé par un code ALINT émis par la carte, ou une procédure décrite au point (2) dans laquelle le code ALINT serait remplacé par un code ALEXT émis par le terminal.

Enfin, on peut prévoir que la zone mémoire où se trouve le code secret devienne accessible en écriture une fois l'utilisateur habilité (pour des raisons de sécurité, il est préférable qu'elle soit interdite en lecture de façon permanente). En effet, l'utilisateur, après s'être habilité, peut souhaiter inscrire un nouveau code secret dans la carte. Toutefois, il est évident que, toujours pour des raisons de sécurité, la zone mémoire du code secret ne doit pas être rendue accessible en écriture pour inscription d'un nouveau code tant que l'utilisateur ne s'est pas habilité avec l'ancien code secret.

Dans un souci de simplicité, on ne décrira pas dans la présente demande de brevet les mécanismes logiques permettant de rendre une zone mémoire inaccessible en lecture et/ou en écriture de façon définitive ou provisoire, qui sont à la portée de l'homme de l'art et sont basés sur un contrôle logique des valeurs d'adresse correspondant à la zone mémoire considérée.

Bien que l'on ait utilisé dans ce qui précède le terme de "carte à mémoire", il est bien évident que la présente invention n'est pas destinée à une seule application au domaine des cartes plastiques mais concerne de façon générale tout support portable susceptible de recevoir une puce.

De façon générale, la présente invention concerne tous les produits utilisant un microcircuit à logique câblée dont l'authenticité doit être vérifiée, comme les étiquettes électroniques sans contact (fonctionnant au moyen de signaux électromagnétiques), les clés électroniques (avec ou sans contact), les cartes électroniques pour d'identification des personnes, etc.

## Revendications

1. Procédé d'authentification applicable à un microcircuit à logique câblée (50) du type monté sur un support portable et à un terminal (10) de lecture du microcircuit, le microcircuit étant équipé d'une mémoire (51) comportant des données (NI, DA) pouvant être lues par le terminal (10), le terminal (10) et le microcircuit (50) comportant des moyens d'authentification (52) aptes à produire un code d'authentification (CA) à partir d'un code d'entrée (CE), les moyens d'authentification du microcircuit comprenant un circuit d'authentification (52) à logique câblée à entrée et sortie série, procédé comprenant :

   - une étape de production par le microcircuit (50) d'un code d'authentification (CA),
   - une étape de production par le terminal (10) d'un code d'authentification (CA') à partir d'un code d'entrée (CE),
   - une étape de comparaison par le microcircuit du code d'authentification (CA) produit par le microcircuit et du code d'authentification (CA') produit par le terminal (10),

   procédé **caractérisé par le fait que** :

   - un code secret (CS) du microcircuit est disposé dans une zone de la mémoire (51) non accessible en lecture par le terminal (10),
   - l'étape de production par le microcircuit (50) d'un code d'authentification (CA) comprend une étape consistant à appliquer sur l'entrée du circuit d'authentification (52) les données suivantes chaînées : les données (NI, DA) de la mémoire (51) pouvant être lues par le terminal (10), le code secret (CS), et un code aléatoire (ALINT, ALEXT),
   - l'étape de production par le terminal (10) d'un code d'authentification (CA') est réalisée à partir d'un code d'entrée (CE) comprenant les données (NI, DA) de la mémoire (51) du microcircuit pouvant être lues par le terminal (10), un code secret (CS') fourni au terminal par un utilisateur du microcircuit, et ledit code aléatoire (ALINT, ALEXT),

   et en ce qu'il comprend une étape consistant à empêcher (60) la transmission du code d'authentification (CA) entre la sortie des moyens d'authentification (52) du microcircuit (50) et le terminal (10), quand le code d'authentification (CA) produit par le microcircuit (50) et le code d'authentification (CA') produit par le terminal (10) sont différents.

2. Procédé selon la revendication 1, **caractérisé en ce que** ledit code aléatoire (ALEXT) est généré par le terminal (10).

3. Procédé selon la revendication 1, **caractérisé en ce que** ledit code aléatoire (ALINT) est généré par le microcircuit (50).

4. Procédé selon l'une des revendications 1 à 3, **caractérisé en ce qu'**il comprend également la comparaison par le terminal (10) du code d'authentification (CA) produit par le microcircuit (50) et du code d'authentification (CA') produit par le terminal (10).

5. Procédé selon l'une des revendications précédentes, **caractérisé en ce que** le code secret (CS) est disposé dans une zone de la mémoire (51) rendue accessible en écriture au terminal (10) une fois contrôlée la validité du code secret (CS') de l'utilisateur.

6. Microcircuit (50) à logique câblée du type monté sur un support portable, comprenant :

   - un circuit d'authentification (52) à entrée série et sortie série, agencé pour produire un code d'authentification (CA) à partir d'un code d'entrée (CE),
   - une mémoire (51) comportant des données (NI, DA) pouvant être lues par un terminal (10),
   - des moyens (54) pour générer un code aléatoire (ALINT),
   - des moyens (53, 54, 56, 57) pour envoyer sous forme chaînée dans le circuit d'authentification (52) un code aléatoire (ALINT, ALEXT) et les données (NI, DA) de la mémoire (51), afin de produire un code d'authentification interne (CA),
   - des moyens (I/O, 55, 57) pour comparer le code d'authentification interne (CA) à un code d'authentification externe (CA') envoyé par un terminal (10),
   - des moyens (60) pour provoquer un blocage au moins partiel du fonctionnement interne du microcircuit (50) si le code d'authentification externe (CA') est différent du code d'authentification interne (CA),

**caractérisé en ce que** :

- le microcircuit comporte un code secret utilisateur (CS) disposé dans une zone de ladite mémoire (51) non accessible en lecture par un terminal (10),
- les moyens (53, 54, 56, 57) pour envoyer sous forme chaînée dans le circuit d'authentification (52) le code aléatoire (ALINT, ALEXT) et les données (NI, DA) de la mémoire (51), sont agencés pour chaîner au code aléatoire (ALINT, ALEXT) et aux données (NI, DA) de la mémoire (51) ledit code secret utilisateur (CS), et
- lesdits moyens de blocage (60) sont agencés pour empêcher la transmission du code d'authentification (CA) depuis la sortie du circuit d'authentification (52) vers l'extérieur (10) du microcircuit.

7. Microcircuit selon la revendication 6, **caractérisé en ce que** les moyens de blocage (60) comprennent une porte logique (60) recevant sur sa première entrée la sortie d'un circuit comparateur (55) et sur sa deuxième entrée la sortie du circuit d'authentification (52), la sortie de la porte logique (60) étant connectée à un plot d'entrée-sortie (I/O) du microcircuit.


## Claims

1. An authentication process applicable to a wired-logic microcircuit (50) of the type mounted on a portable support and to a terminal (10) for reading the microcircuit, the microcircuit being equipped with a memory (51) comprising data (NI, DA) which can be read by the terminal (10), the terminal (10) and the microcircuit (50) comprising authentication means (52) capable of producing an authentication code (CA) from an input code (CE), the authentication means of the microcircuit comprising a wired-logic authentication circuit (52) with serial input and output, the process comprising:

- a step for production by the microcircuit (50) of an authentication code (CA),
- a step for production by the terminal (10) of an authentication code (CA') from an input code (CE), and
- a step for comparison by the microcircuit of the authentication code (CA) produced by the microcircuit and the authentication code (CA') produced by the terminal (10),

**characterised in that**:

- a secret code (CS) of the microcircuit is disposed in a zone of the memory (51) which is not accessible for reading by the terminal (10),
- the step for production by the microcircuit (50) of an authentication code (CA) comprises a step consisting of applying to the input of the authentication circuit (52) the following chained data: the data (NI, DA) of the memory (51) which can be read by the terminal (10), the secret code (CS) and a random code (ALINT, ALEXT), and
- the step for production by the terminal (10) of an authentication code (CA') is effected from an input code (CE) comprising the data (NI, DA) of the memory (51) of the microcircuit which can be read by the terminal (10), a secret code (CS') furnished to the terminal by a user of the microcircuit and said random code (ALINT, ALEXT),

and that it comprises a step consisting of preventing (60) transmission of the authentication code (CA) between the output of the authentication means (52) of the microcircuit (50) and the terminal (10) when the authentication code (CA) produced by the microcircuit (50) and the authentication code (CA') produced by the terminal (10) are different.

2. A process according to claim 1 **characterised in that** said random code (ALERT) is generated by the terminal (10).

3. A process according to claim 1 **characterised in that** said random code (ALINT) is generated by the microcircuit (50).

4. A process according to one of claims 1 to 3 **characterised in that** it also comprises comparison by the terminal (10) of the authentication code (CA) produced by the microcircuit (50) and the authentication code (CA') produced by the terminal (10).

5. A process according to one of the preceding claims **characterised in that** the secret code (CS) is disposed in a zone of the memory (51) which is made accessible for writing to the terminal (10) once the validity of the secret code (CS') of the user is checked.

6. A wired-logic microcircuit (50) of the type mounted on a portable support, comprising:

- an authentication circuit (52) with a serial input and a serial output, which is arranged to produce an authentication code (CA) from an input code (CE),
- a memory (51) comprising data (NI, DA) which can be read by a terminal (10),
- means (54) for generating a random code (ALINT),

- means (53, 54, 56, 57) for sending in chained form into the authentication circuit (52) a random code (ALINT, ALEXT) and the data (NI, DA) of the memory (51) in order to produce an internal authentication code (CA),
- means (I/O, 55, 57) for comparing the internal authentication code (CA) to an external authentication code (CA') sent by a terminal (10), and
- means (60) for causing at least partial blocking of the internal functioning of the microcircuit (50) if the external authentication code (CA') is different from the internal authentication code (CA),

**characterised in that**

- the microcircuit comprises a secret user code (CS) disposed in a zone of said memory (51) which is not accessible for reading by a terminal (10),
- the means (53, 54, 56, 57) for sending in chained form into the authentication circuit (52) the random code (ALINT, ALEXT) and the data (NI, DA) of the memory (51) are arranged to chain to the random code (ALINT, ALERT) and to the data (NI, DA) of the memory (51) said secret user code (CS), and
- said blocking means (60) are arranged to prevent the transmission of the authentication code (CA) from the output of the authentication code (52) towards the exterior (10) of the microcircuit.

7. A microcircuit according to claim 6 **characterised in that** the blocking means (60) comprise a logic gate (60) receiving at its first input the output of a comparator circuit (55) and at its second input the output of the authentication circuit (52), the output of the logic gate (60) being connected to an input-output terminal (I/O) of the microcircuit.

**Patentansprüche**

1. Beglaubigungsverfahren zur Anwendung in einem verdrahteten Logik-Mikroschaltkreis (50) vom auf einer tragbaren Unterlage montierten Typ und in einem Lese-Terminal (10) des Mikroschaltkreises, wobei der Schaltkreis mit einem Speicher (51) ausgerüstet ist, der Daten (NI, DA) umfasst, die vom Terminal (10) empfangen und gelesen werden können, wobei das Terminal (10) und der Mikroschaltkreis (50) Beglaubigungsmittel (52) umfassen, die sich dazu eignen, einen Beglaubigungscode (CA) aus einem Eingangscode (CE) zu erzeugen, wobei die Beglaubigungsmittel des Mikroschaltkreises einen Logik-Beglaubigungsschaltkreis (52) umfassen, der am Eingang und Ausgang in Serie verdrahtet ist, wobei das Verfahren umfasst:

- eine vom Mikroschaltkreis (50) durchzuführende Erstellungsstufe des Beglaubigungscodes (CA),

- eine vom Terminal (10) durchzuführende Erstellungsstufe eines Beglaubigungscodes (CA') aus dem Eingangscode (CE),

- eine vom Mikroschaltkreis durchzuführende Stufe zum Vergleich des vom Mikroschaltkreis erstellten Beglaubigungscodes (CA) mit dem vom Terminal (10) erstellten Beglaubigungscode (CA'),

wobei das Verfahren **dadurch gekennzeichnet ist, dass**

- ein Geheimcode (CS) des Mikroschaltkreises in einer Speicherzone (51) angeordnet ist, die beim vom Terminal (10) durchgeführten Lesen nicht zugänglich ist,

- die vom Mikroschaltkreis (50) durchgeführte Erstellungsstufe eines Beglaubigungscodes (CA) eine Stufe umfasst, in der auf den Eingang des Beglaubigungsschaltkreises (52) die folgenden verknüpften Daten: die Daten (NI, DA) des Speichers (51), die vom Terminal (10) empfangen und gelesen werden können, der Geheimcode (CS) und ein Zufallscode (ALINT, ALEXT) gegeben werden,

- die vom Terminal (10) durchgeführte Erstellungsstufe des Beglaubigungscodes (CA'), ausgehend von einem Eingangscode (CE), der die Daten (NI, DA) des Speichers (51) des Mikroschaltkreises umfasst, die vom Terminal (10) empfangen und gelesen werden können, von einem Geheimcode (CS'), der am Terminal vom Anwender des Mikroschaltkreises eingegeben wird, und vom genannten Zufallscode (ALINT, ALEXT) durchgeführt wird,

und dass das Verfahren eine Stufe (60) umfasst, in der die Übertragung des Beglaubigungscodes (CA) zwischen dem Ausgang der Beglaubigungsmittel (52) des Mikroschaltkreises (50) und des Terminals (10) verhindert wird, wenn der vom Mikroschaltkreis (50) erstellte Beglaubigungscode (CA) und der vom Terminal (10) erstellte Beglaubigungscode (CA') verschieden sind.

2. Verfahren gemäß Anspruch 1, **dadurch gekennzeichnet, dass** der Zufallscode (ALEXT) vom Terminal (10) erzeugt wird.

**3.** Verfahren gemäß Anspruch 1, **dadurch gekennzeichnet, dass** der Zufallscode (ALINT) vom Mikroschaltkreis (50) erzeugt wird.

**4.** Verfahren gemäß einem der Ansprüche 1 bis 3, **dadurch gekennzeichnet, dass** es auch den vom Terminal (10) durchzuführenden Vergleich des vom Mikroschaltkreis (50) erstellten Beglaubigungscodes (CA) mit dem vom Terminal (10) erstellten Beglaubigungscode (CA') umfasst.

**5.** Verfahren gemäß einem der vorhergehenden Ansprüche, **dadurch gekennzeichnet, dass** der Geheimcode (CS) in einer Zone des Speichers (51) angeordnet ist, die beim Einschreiben in das Terminal (10) zugänglich gemacht wird, sobald die Gültigkeit des Geheimcodes (CS') des Anwenders überprüft worden ist.

**6.** Verdrahteter Logik-Mikroschaltkreis (50) vom auf einer tragbaren Unterlage montierten Typ, umfassend:

- einen Beglaubigungsschaltkreis (52) am Eingang in Serie und Ausgang in Serie, welcher angeordnet ist, einen Beglaubigungscode (CA) aus einem Eingangscode (CE) zu erstellen,

- einen Speicher (51), umfassend Daten (NI, DA), die von einem Terminal (10) empfangen und gelesen werden können,

- Mittel, (54) zur Erzeugung eines Zufallscodes (ALINT),

- Mittel (53, 54, 56, 57), um in im Beglaubigungsschaltkreis (52) verketteter Form einen Zufallscode (ALINT, ALEXT) und die Daten (NI, DA) des Speichers (51) abzusenden, um einen internen Beglaubigungscode (CA) zu erstellen,

- Mittel (I/O, 55, 57), um den internen Beglaubigungscode (CA) mit einem externen Beglaubigungscode (CA') zu vergleichen, der vom Terminal (10) abgeschickt wird,

- Mittel (60) zur zumindest teilweisen Blockierung der inneren Funktionsweise des Mikroschaltkreises (50), wenn sich der externe Beglaubigungscode (CA') vom internen Beglaubigungscode (CA) unterscheidet,

**dadurch gekennzeichnet, dass**

- der Mikroschaltkreis einen Anwender-Geheimcode (CS) umfasst, der in einer Zone des genannten Speichers (51) angeordnet ist, die beim durch das Terminal (10) erfolgenden Lesevorgang nicht zugänglich ist,

- die Mittel (53, 54, 56, 57), um in im Beglaubigungsschaltkreis (52) verketteter Form den Zufallscode (ALINT, ALEXT) und die Daten (NI, DA) des Speichers (51) abzusenden, betätigt werden, um den genannten Anwender-Geheimcode (CS) mit dem Zufallscode (ALINT, ALEXT) und mit den Daten (NI, DA) des Speichers (51) zu verketten, und dass

- die genannten Blockierungsmittel (60) betätigt werden, um die Übertragung des Beglaubigungscodes (CA) aus dem Ausgang des Beglaubigungsschaltkreises (52) zum Außenbereich (10) des Mikroschaltkreises zu verhindern.

**7.** Mikroschaltkreis gemäß Anspruch 6, **dadurch gekennzeichnet, dass** die Blockierungsmittel (60) eine Logik-Pforte (60) umfassen, die auf ihrem ersten Eingang den Ausgang eines Vergleicherschaltkreises (55) und auf ihrem zweiten Eingang den Ausgang des Beglaubigungsschaltkreises (52) empfängt, wobei der Ausgang der Logik-Pforte (60) an einen Eingang/Ausgang-Kontakt (I/O) des Mikroschaltkreises angeschlossen ist.

**FIG.1**

FIG.2

FIG.3